# EUROPEAN PATENT SPECIFICATION

(11) **EP 0 885 245 B1**
(45) Date of publication and mention of the grant of the patent: **24.11.1999**
(21) Application number: 97905508.4
(22) Date of filing: 04.03.1997
(51) Int. Cl.: C08B 31/18

(54) **CATALYST-FREE OZONE OXIDATION OF STARCH**
KATALYSATORFREIE OZON-OXIDATION VON STÄRKE
OXYDATION D'AMIDON AU MOYEN D'OZONE ET SANS CATALYSEUR

(30) Priority: 04.03.1996 NL 1002526
(43) Date of publication of application: 23.12.1998
(73) Proprietor: Coöperatieve Verkoop- en Productievereniging van Aardappelmeel en Derivaten 'AVEBE' B.A., NL-9641 JA Veendam (NL)
(72) Inventor: KESSELMANS, Ronald, Peter, Wilhelmus, NL-9468 HK Annen (NL); BLEEKER, Ido, Pieter, NL-9791 LS Ten Boer (NL)
(74) Representative: Smulders, Theodorus A.H.J., Ir.
(86) International application number: NL9700106
(87) International publication number: WO9735890

(56) References cited:
- JOURNAL OF APPLIED POLYMER SCIENCE, vol. 8, no. 4, 1964, US, pages 1597-1606, XP002017225 C. D. SZYMANSKI: " Ozone Oxidation of Corn Starch" cited in the application
- DATABASE WPI Week 86 Derwent Publications Ltd., London, GB; Class 15, AN 86-096640 XP002017226 & JP 61 040 301 A (HOKUETSU SEISHI) , 26 February 1986 cited in the application
- CELLULOSE AND ITS DERIVATIVES, CHEMISTRY, BIOCHEMISTRY AND APPLICATIONS, 1985, UK, pages 161-171, XP000607692 P. ANGIBEAUD ET AL.: "Cellulose and Starch Reactivity with Ozone" cited in the application

## Description

This invention relates to a method for oxidizing starch using ozone. In this method no use is made of catalysts.

The oxidation of starch has been described in diverse variants. Known oxidizing agents for this purpose are periodic acid, peracetic acid, perborate, persulfate, potassium permanganate, lead(IV) salts, hydrogen peroxide, chlorite and hypochlorite.

Dutch patent specification 43493, European patent application 427 349 and international patent application 91.17189 disclose the oxidation of polysaccharides with a catalytic amount of bromide to form oxidized polysaccharides. The bromide is converted to hypobromite by hypochlorite or by electrochemical route, which entails a complicated process control.

The most conventional method for the oxidation of starch in aqueous suspensions is carried out using hypochlorite. It has as a disadvantage that large amounts of salts are formed in the process, which causes problems in the work-up and in the processing of the waste water.

It is also known that ozone can be used as an oxidizing agent for starch.

Szymanski, for instance, in the Journal of Applied Polymer Science 8 (1964), 1597-1606, describes a method for oxidizing maize starch using ozone. The oxidation with ozone is carried out both under dry conditions and in aqueous suspension and in an organic solvent. The oxidation reactions were carried out at decreasing pH. In particular, the final pH in the reaction mixture is found to be between 1 and 2.5.

The aim of the study which is described in this article by Szymanski was the introduction of a large amount of aldehyde groups into the starch. Because in addition to the intended aldehyde groups a considerable amount of ketone groups was formed as well, the objective was not achieved according to the author.

Further, in Abstract no. 81089x from Chemical Abstracts 105(10) (1993) & JP-A-61 040 301 it is suggested that oxidized starch can be obtained with ozone. It is described that ozone in an air stream (0.2 mg ozone/1; 0.091 m³/h) is passed through maize starch (1 litre; 5% in water) for 1 hour at a temperature of 40°C. It can be derived from these figures that 0.31 mol maize starch was contacted with 0.00038 mol ozone. Assuming an efficiency of 100% and that only carbonyl groups are formed, it can be calculated that the content of carbonyl groups is at best 0.0012 mol per glucose unit of the starch.

The present inventors have worked this protocol again (see Comparative Example 1 hereinbelow), and even used a multifold quantity of ozone. In the reaction the pH decreased. It was found that even with the larger amount of ozone, no oxidation of the maize starch could be demonstrated. On the other hand, the fat and protein content of the maize starch decreased. Probably, this effect was responsible for the effect when used in paper, mentioned in the abstract. Also, the colour of the maize starch changed from yellow to white. Accordingly, the conclusion can be drawn that maize starch was not so much oxidized but, rather, that contaminants were broken down under the influence of ozone, so that a purified or bleached starch is obtained.

The use of ozone as bleaching agent in the paper industry is also mentioned in the introduction of an article by Angibeaud et al. in "Cellulose, Its Derivatives" ed. J.F. Kennedy, published by Horwood Chichester U.K. (1985) entitled "Cellulose and Starch Reactivity with Ozone".

In the introduction of this article it is concluded that the use of ozone as oxidizing agent for polysaccharides, with starch being mentioned as an example, is impeded by the absence of selectivity. Both carbonyl and carboxyl groups are formed, while glycosidic bonds are broken. In order to gain some more insight into the mechanisms underlying the ozone oxidation, next the ozone oxidation of amylose is studied. In a suspension of amylose buffered at pH 7, in addition to depolymerization, the incorporation of carboxyl groups is reported. It is expressly stated that the results are not in agreement with the results Szymanski found for maize starch, viz. the incorporation of aldehyde groups.

It is further noted that U.S. Patent 3,208,851 discloses a method for providing a batter for foods to be deep-fried, which batter adheres better to the food to be deep-fried. This batter is prepared through dry oxidation of starch, using an oxidizing gas. One of the examples of such an oxidizing gas is ozone. In the examples, in the cases where ozone is used, only maize starch is treated with it. No specifics are given with regard to the starch product obtained.

Furthermore, it is described in U.S. Patent 3,361,741 that starch in an aqueous suspension can be oxidized by tetravalent lead ions, these lead ions being obtained by oxidation of bi- or trivalent lead ions with ozone.

German Offenlegungsschrift 22 33 977 describes the oxidation of polysaccharides using an aqueous basic solution of a silver oxide system. In the presence of this silver oxide system the polysaccharides can be oxidized with a large number of agents, including ozone.

The object of the present invention is to provide a method for the oxidation of starch, whereby only slight amounts of salt, if any at all, are formed and which method leads to a high yield of desired products in short reaction times.

It has now been found that root starch, tuber starch and waxy cereal starch or derivatives thereof can be selectively oxidized using ozone without having to use a catalyst such as the above-mentioned silver and lead compounds. More particularly, a method has been found wherein starch in an aqueous suspension is treated with ozone, in such a manner that the properties of the oxidized product can be set depending on the reaction conditions.

The invention relates to a method for oxidizing root starch, tuber starch or waxy cereal starch or derivatives thereof, wherein ozone is passed through an aqueous suspension or solution of starch, with the pH of the suspension or solution being maintained at a constant value without a catalyst being present. The efficiency can be influenced depending on the pH. Yields of more than 90% desired product can be obtained.

Root starches, such as tapioca starch, tuber starches, such as potato starch, and waxy cereal starches (derived from amylopectin-rich grains such as waxy maize and waxy rice) are used because these starches are characterized by a low content of lipids.

The derivatives of the above-mentioned starches which are used in the method according to the invention must be compatible with ozone under the reaction conditions used. Examples of such derivatives are cross-linked starches, starches with esterified or etherified groups attached; or physically modified starches such as roller-dried or extruded starch. For that matter, it is often simpler first to oxidize the starch and only then to derivatize or modify it.

In carrying out the method according to the invention, at least a part of the primary hydroxyl groups are selectively oxidized. In particular, mainly oxidation occurs on the C6 atom, while the ratio of carbonyl groups to carboxyl groups can vary from 20:1 to 2:1. This has been demonstrated with the aid of a gas chromatography/mass spectrometry technique (Hewlett Packard, gas chromatograph GC 5890 series II and mass spectrometer MS 5989A).

The advantage of the above-mentioned method is that a starch with a high content of aldehyde groups is obtained, while the glucosation remains intact; as contrasted with known oxidation methods which lead to dialdehyde starch (DAS), such as described, for instance, in WO-A-93/01905. This has a favorable effect on the biodegradability and application properties of the product. The advantage of this method is further that a product can be made with the starch still present more or less in granular form, with a low intrinsic viscosity. This product with a low intrinsic viscosity is a non-cold soluble starch. The intrinsic viscosity of a substance is understood to mean the extent to which one molecule of that substance in solution can increase the viscosity and is determined by measuring the hydrodynamic volume of that substance and expressed in dl/g. The lower the intrinsic viscosity, the higher the concentration of starch in water or another solvent can become.

The products with a low intrinsic viscosity obtained by the method according to the invention can be used in adhesives, in paper (e.g. coating, surface-sizing) and in textile (e.g. well-accessible sizes).

The carbonyl groups form reaction centres and can be converted to e.g. amines, imines, acetals, and the like, by the conventional procedures. The amines and imines can participate in a starch-protein interaction, which has important consequences for the water-resistance of, for instance, bioplastics. Acetals render the product more hydrophobic, which provides advantages for paper and adhesive applications.

The pH is held constant by adding during the reaction a base or a solution thereof, for instance a solution of sodium hydroxide or potassium hydroxide. Buffer systems are less preferred because they are based on salts, which is precisely what the invention contemplates avoiding. Moreover, buffer systems are more expensive.

In a preferred embodiment, in the aqueous reaction medium a surface tension reducing agent is present, which provides that the ozone-containing gas bubbles can become smaller. Thus the starch molecules are contacted more intimately with the oxidizing agent. Suitable surface tension reducing agents include acetic acid, tertiary butanol, octanol and known anti-foaming agents such as block polymers of ethylene oxide and propylene oxide (for instance Pluronic L61).

The acetic acid can be used in concentrations from 0.1 to 10%, preferably from about 0.2 to 2%; tert.butanol in concentrations of 0.1 to 15%; the above-mentioned anti-foaming agents in concentrations of 0.01 to 5%, preferably from about 0.05 to 2.5%. These percentages are based on the amount of dry starch treated according to the method. The above-mentioned additives greatly increase the reaction efficiency, even by a factor of 2 or more.

The pH during the reaction may not be higher than 10.5 because ozone decomposes at higher pH values, and not lower than 1 in connection with hydrolysis of the starch. According to the invention, the pH is preferably between 4 and 8 and more preferably between 5 and 7, because in this pH range the reaction efficiency is highest. Moreover, no subsequent neutralization step is necessary.

The starch concentration in the reaction mixture can vary from 1 to 45% by weight (based on dry matter), preferably from 10 to 40% by weight.

As a source and as a carrier gas for the ozone, oxygen, air or any other oxygenous carrier gas can be used. Also, ozone can be generated directly from water. When a gas is used, preferably oxygen is used.

The reaction can be carried out at temperatures of from 0 to 60°C and preferably of between 5 and 40°C. At a temperature of about 15°C ozone dissolves best in the reaction medium, which is preferably aqueous. The upper limit of 60°C is determined by the fact that starch starts to dissolve above this temperature, while ozone becomes increasingly reactive with increasing temperature. From a practical point of view, the above-mentioned preferred temperature range is very attractive, also from the point of view of process control.

The reaction time is between 10 minutes and 20 hours and depends on the desired degree of oxidation.

By increasing the pressure in the reactor vessel, the solubility of ozone in the reaction medium can be increased.

The use of ozone as oxidizing agent without catalysts being present has as an advantage that the product contains no contaminants deriving from the oxidizing agent. Moreover, ozone is a cheap oxidant and no complicated reaction equipment is necessary.

By applying the above-mentioned method, the intrinsic viscosity of starch can be reduced, so that it can be rendered suitable for various applications for which starch products with a reduced viscosity are of importance. The intrinsic viscosity can be set as desired, *inter alia* with the reaction pH, reaction temperature, reaction time, addition of surface-active substances.

The invention will be further illustrated in and by the following non-limiting examples. The oxidation products are analyzed in the following manner.

The content of carboxyl groups (DScooh) is expressed in the number of moles carboxyl per mole anhydroglucose unit (DScarboxyl).
The (DScooh) is determined titrimetrically. To that end, the sample material is brought into the H⁺ form with 1N HCl and titrated to pH 8.6 with 0.1 M NaOH. The titration is carried out in 0.5 M NaCl.

The content of carbonyl groups (DSc=o) is expressed in the number of moles of carbonyl per mole of anhydroglucose unit (DScarbonyl).
The DSc=o is determined by determining the dextrose equivalent (DE; in mg/g) of the sample material with the Luff-Schoorl method, followed by conversion, as follows: (DS_{c=o}) = DE/(1000-DE).

The intrinsic viscosity (IV) is determined in a known manner with a Viscotek Y501B with 1 M NaOH as solvent and expressed in g/dl.

### Examples

### Comparative Example 1

### Method of Japanese patent publication 61040301 A2.

In a double-walled reactor vessel with a total contents of 2.06 1, at 40°C 50 g (44 g dry matter; 0.27 mol) maize starch was suspended in 950 ml water. The suspension was light yellow in colour. The pH was 5.4. Then (670 mg, 0.014 mol) ozone in oxygen gas was passed through for 5 minutes. The space above the suspension was also filled with ozone-containing gas. After 5 minutes the ozone dosing was stopped and the reactor was closed. In the space above the suspension (1.081 1) 34 mg (1.081 1 x 32 mg) ozone was present. The pH of the suspension had meanwhile fallen to 5.3. In comparison with the above-mentioned Japanese patent publication, a multiple (670 mg) of 18 mg ozone is contacted with 50 g maize starch. The suspension was vigorously stirred for an hour, the pH decreasing further to 5.2. The product was adjusted to pH 5.5 with NaOH, filtered off and washed with 500 ml water. After drying the physical data of the product, having meanwhile turned white in colour, were collected (Table 1).

**Table 1:**

| Ozone treatment of maize starch according to JP 61040301 A2. | | |
|---|---|---|
| Parameter | before | after |
| Colour | light yellow | white |
| DScooh | <0.003 | <0.003 |
| DSc=o | <0.005 | <0.005 |
| Fat content (mg/g) | 5.9 | 3.0 |
| Protein content (mg/g) | 3.1 | 2.3 |

### Oxidation conditions and standard work-up procedure

Unless specified otherwise, the following experiments were carried out in a 1-litre glass batch reactor provided with an agitator, a gas inlet and a pH meter having coupled thereto an automatic titrator which contained 4.4 wt.% NaOH solution. The partial overpressure was 0.1 bar.

Ozone was generated, unless specified otherwise, by passing about 250 1 oxygen gas per hour through an ozone generator (Fischer, type 502). The ozone production at this flow rate was 8 g/hour. The ozone containing gas was passed through the reaction mixture.

Upon completion of the reaction the product was worked up by adjusting to pH 5.5 in aqueous suspension with 6 M sulfuric acid or with 4.4 wt.% NaOH solution. Then the product was filtered off and washed with a 10-fold - based on the weight of starch - amount of water. The product loss and the physical data were determined after the products were dried. In all experiments demineralized water was used.

The amount of an addition is expressed in percentage by weight of the amount of starch, calculated on a dry matter basis.

### Example 1

### Oxidation with ozone at different reaction pHs; 4.5 - 6.0 - 7.5 - 9.0 - 10.5

250 g (200 g dry matter, 1.2 mol) potato starch was suspended in 750 ml water. The suspension was adjusted to 35°C. Then for 7.5 hours 8 g/hour ozone was passed through, with the pH of the suspension being kept constant with NaOH.

The reaction pH of 4.5 was set with sulfuric acid, the other pHs with NaOH.

After work-up according to standard instructions, product loss and the data of the products were collected in Table 2.

**Table 2**

| Oxidation of potato starch with ozone at different pHs | | | | |
|---|---|---|---|---|
| pH | DScooh | DSc=o | IV | Product loss |
| 4.5 | 0.003 | 0.015 | 0.28 | n.d. |
| 6.0 | 0.007 | 0.042 | 0.14 | 3.5 % |
| 7.5 | 0.006 | 0.016 | 0.31 | 3.0 % |
| 9.0 | 0.004 | <0.003 | 1.24 | 3.5 % |
| 10.5 | 0.001 | <0.003 | 2.13 | 7.5 % |
| n.d.= not demonstrable | | | | |

The reaction efficiency is clearly highest at pH=6, the reaction proceeds fastest. Moreover, the product obtained is interesting; it has a high content of c=o and cooh groups, which guarantees stability of viscosity. Moreover, a product with a low intrinsic viscosity is obtained. Further, it is striking that through variation of the pH the oxidation can be controlled for intrinsic viscosity and, for instance, c=o/cooh ratio.

### Example 2

### Oxidation of potato starch with ozone at different temperatures; 15 - 30 - 45°C

245 g (200 g dry matter) potato starch was suspended in 1755 g water. Then for 5 hours at 15°C ozone-containing oxygen was passed through via a porous stone (about 3% ozone; flow rate 100 1/h). During the reaction the pH was held at 6.0 with the aid of 4.4% NaOH from an automatic titrator combination. After reaction the product was filtered off and washed with 1 l water.

490 g (400 g dry matter) potato starch was suspended in 1510 g water. Then for 5 hours at 30°C ozone-containing oxygen was passed through via a porous stone (about 3% ozone; flow rate 100 l/h). During the reaction the pH was held at 6.0 with the aid of 4.4% NaOH and an automatic titrator combination. After reaction the product was filtered off and washed with 2 l water.

490 g (400 g dry matter) potato starch was suspended in 1510 g water. Then for 5 hours at 45°C ozone containing oxygen was passed through via a porous stone (about 3% ozone; flow rate 100 l/h). During the reaction the pH was held at 6.0 with the aid of 4.4% NaOH and an automatic titrator combination. After reaction the product was filtered off and washed with 2 l water.

**Table 3**

| Oxidation of potato starch with ozone at different temperatures; 15 - 30 - 45°C | | | |
|---|---|---|---|
| Temp | DScooh | DSc=o | IV |
| 15°C | 0.007 | 0.050 | 0.14 |
| 30°C | 0.001 | 0.015 | 0.36 |
| 45°C | 0.001 | 0.005 | 0.56 |

At a temperature of 15°C the highest reaction efficiency is found. This is probably connected with the fact that around this temperature the ozone concentration in water is highest.

### Example 3

### Oxidation of potato starch with ozone in the presence of acetic acid

490 g (400 g dry matter) potato starch was suspended in 1510 g water. To this suspension was added 6.0 g acetic acid, whereafter the pH was adjusted to 3.0 with the aid of a 4.4% NaOH solution. Then for 8 hours at 30°C ozone-containing oxygen was passed through via a porous stone (about 3% ozone; flow rate 100 1/h). During the reaction the pH was held at 3.0 with the aid of 4.4% NaOH from an automatic titrator combination. After reaction the product was filtered off and washed with 2 l water.

490 g (400 g dry matter) potato starch was suspended in 1510 g water. To this suspension was added 6.0 g acetic acid, whereafter the pH was adjusted to 4.5 with the aid of a 4.4% NaOH solution. Then for 5 hours at 30°C ozone-containing oxygen was passed through via a porous stone (about 3% ozone; flow rate 100 l/h). During the reaction the pH was held at 4.5 with the aid of 4.4% NaOH from an automatic titrator combination. After reaction the product was filtered off and washed with 2 l water.

**Table 4**

| Oxidation of potato starch with ozone in the presence of acetic acid | | | |
|---|---|---|---|
| pH | DScooh | DSc=o | IV |
| 3.0 | 0.019 | 0.060 | 0.10 |
| 4.5 | 0.006 | 0.040 | 0.13 |

### Example 4

### Oxidation of potato starch with ozone in the presence of t-butanol

250 g (200 g dry matter, 1.2 mol) potato starch was suspended in a mixture of 75 ml t-BuOH and 675 ml water. The suspension was adjusted to 35°C and the pH was adjusted to 6.0 with NaOH. Then for 7.5 hours 8 g/hour ozone was passed through, with the pH of the suspension being kept constant with NaOH. Work-up proceeded according to standard instructions.

**Table 5**

| Oxidation of potato starch with ozone in the presence of t-butanol | |
|---|---|
| DScooh | 0.008 |
| DSc=o | 0.060 |
| IV | 0.14 |

### Example 5

### Oxidation of potato starch with ozone from different feed gases

250 g (200 g dry matter, 1.2 mol) potato starch was suspended in 750 ml water. Then at 25°C for 7.5 hours 4 g/hour ozone was passed through, the pH of the suspension being held at 6.0 with NaOH. Work-up proceeded according to standard instructions.
- Feed gas oxygen :: gas flow = 75 l/hour
- Feed gas air :: gas flow = 400 l/hour

**Table 6**

| Oxidation of potato starch with ozone from different feed gases | | | |
|---|---|---|---|
| feed gas | DScooh | DSc=o | IV |
| oxygen | 0.003 | 0.022 | 0.34 |
| air | 0.001 | 0.003 | 0.45 |

### Example 6

### Ozone oxidation of different starches under equal conditions (pH=4.5; 30°C and in 1.5% acetic acid)

6a Potato starch (AM)
490 g (400 g dry matter) potato starch was suspended in 1510 g water. To this suspension was added 6.0 g acetic acid, whereafter the pH was adjusted to 4.5 with the aid of a 4.4% NaOH solution. Then for 5 hours at 30°C ozone-containing oxygen was passed through via a porous stone (about 3% ozone; flow rate 100 l/h). During the reaction the pH was held at 4.5 with the aid of 4.4% NaOH from an automatic titrator combination. After reaction the product was filtered off and washed with 2 l water.

6b Amylopectin potato starch (AAZM)
488 g (400 g dry matter) amylopectin potato starch was suspended in 1510 g water. Further carried out as 6a.

6c Waxy maize starch (WM)
449 g (400 g dry matter) waxy maize starch was suspended in 1550 g AD, to which was added 4 g Pluronic L61 to prevent foaming. Further carried out as 6a.

6d Tapioca starch (TZ)
459 g (400 g dry matter) tapioca starch was suspended in 1550 g AD, to which was added 4 g Pluronic L61 to prevent foaming. Further carried out as 6a.

**Table 7**

| Ozone oxidation of different starches | | |
|---|---|---|
| starch | DScooh | DSc=o |
| AM | 0.006 | 0.040 |
| AAZM | 0.008 | 0.043 |
| WM | 0.007 | 0.022 |
| TZ | 0.013 | 0.066 |

Tapioca and waxy maize starch have the smallest granular form. For tapioca this leads to advantages in efficiency. This advantage is not found with the waxy cereal starch, by contrast. Possibly this is to do with the presence of lipids and with a deviant granular structure.

## Claims

1. A method for oxidizing root starch, tuber starch or waxy cereal starch or derivatives thereof in the absence of a catalyst, wherein ozone is passed through an aqueous suspension or solution of starch and wherein the pH is maintained at a constant value.

2. A method according to claim 1, wherein the pH is maintained at a value between 4 and 7.

3. A method according to claim 1 or 2, wherein the oxidation is carried out in suspension.

4. A method according to any one of claims 1-3, wherein the pH is kept constant by continuously adding a base or a solution thereof during the reaction.

5. A method according to any one of claims 1-4, wherein the starch is selected from potato starch or tapioca starch.

6. A method according to any one of claims 1-5, wherein surface tension reducing substances are added.

7. A method according to claim 6, wherein the surface tension reducing substances are selected from acetic acid, tert.butanol, octanol and anti-foaming agents.

## Patentansprüche

1. Verfahren zur Oxidation von Wurzel-, Knollen- oder Wachsgetreidestärken oder deren Derivaten in Abwesenheit eines Katalysators, worin Ozon durch eine wäßrige Stärkesuspension oder -lösung geleitet wird und worin der pH auf einem konstanten Wert gehalten wird.

2. Verfahren nach Anspruch 1, worin der pH auf einem Wert zwischen 4 und 7 gehalten wird.

3. Verfahren nach Anspruch 1 oder 2, worin die Oxidation in einer Suspension durchgeführt wird.

4. Verfahren nach einem der Ansprüche 1 bis 3, worin der pH durch kontinuierliche Zugabe einer Base oder einer Lösung hiervon während der Umsetzung konstant gehalten wird.

5. Verfahren nach einem der Ansprüche 1 bis 4, worin die Stärke ausgewählt ist aus Kartoffelstärke oder Tapiokastärke.

6. Verfahren nach einem der Ansprüche 1 bis 5, worin Substanzen zugegeben werden, die die Oberflächenspannung reduzieren.

7. Verfahren nach Anspruch 6, worin die die Oberflächenspannung reduzierenden Substanzen ausgewählt sind aus Essigsäure, tert.-Butanol, Octanol und Entschäumern.

## Revendications

1. Procédé d'oxydation d'amidon de racines, d'amidon de tubercules ou d'amidon de céréales cireux ou leurs dérivés en l'absence d'un catalyseur, dans lequel on fait passer l'ozone dans une suspension aqueuse ou une solution d'amidon et dans lequel le pH est maintenu à une valeur constante.

2. Procédé selon la revendication 1, dans lequel le pH est maintenu à une valeur entre 4 et 7.

3. Procédé selon la revendication 1 ou 2, dans lequel on effectue l'oxydation en suspension.

4. Procédé selon l'une quelconque des revendications 1 à 3, dans lequel on maintient le pH constant en ajoutant continuellement une base ou une solution de celle-ci pendant la réaction.

5. Procédé selon l'une quelconque des revendications 1 à 4, dans lequel on choisit l'amidon parmi l'amidon de pommes de terre ou l'amidon de tapioca.

6. Procédé selon l'une quelconque des revendications 1 à 5, dans lequel on ajoute des substances de réduction de la tension superficielle.

7. Procédé selon la revendication 6, dans lequel les substances de réduction de la tension superficielle sont choisies parmi l'acide acétique, le t-butanol, l'octanol et les agents d'anti-moussage.
